# EUROPEAN PATENT APPLICATION

(11) **EP 4 593 185 A1**
(43) Date of publication of application: **30.07.2025**
(21) Application number: 23926946.7
(22) Date of filing: 31.05.2023
(51) Int. Cl.: H01M 50/375, H01M 50/30

(54) **BATTERY AND ENERGY STORAGE APPARATUS**

(30) Priority: 10.03.2023 CN 202320448498 U
(71) Applicant: Contemporary Amperex Technology (Hong Kong) Limited, Central (HK)
(72) Inventor: YANG, Piaopiao, Ningde, Fujian 352100 (CN); QIAN, Ou, Ningde, Fujian 352100 (CN); LI, Yao, Ningde, Fujian 352100 (CN); CHEN, Xiaobo, Ningde, Fujian 352100 (CN)
(74) Representative: Thoma, Michael
(86) International application number: PCT/CN2023/097455
(87) International publication number: WO 2024/187597

(57) **Abstract**

Provided in the embodiments of the present application are a battery and an energy storage apparatus. The battery comprises a battery case, a pressure relief mechanism, and a first negative pressure mechanism. The pressure relief mechanism is arranged at a wall portion of the battery case, and the pressure relief mechanism is used for relieving the internal pressure of the battery case when the internal pressure or temperature of the battery case reaches a threshold value. The first negative pressure mechanism is connected to the pressure relief mechanism, and the first negative pressure mechanism is used for generating a negative pressure, so as to direct gas in the battery case to move towards the pressure relief mechanism. The first negative pressure mechanism facilitates the discharge of gas inside the battery, thereby reducing potential accident hazards and improving the reliability of the battery.

## Description

### CROSS-REFERENCE TO RELATED APPLICATION

The present application claims priority to Chinese Patent Application No. 202320448498.2 filed on March 10, 2023 and entitled "BATTERY AND ENERGY STORAGE APPARATUS", the content of which is incorporated herein by reference in its entirety.

### TECHNICAL FIELD

The present application relates to the technical field of energy storage, and in particular, to a battery and an energy storage device.

### BACKGROUND

With the promotion and application of new energies such as solar energy and wind energy, energy storage technology has also developed accordingly. Lithium batteries, due to their advantages of high energy, long service life, high rated voltage, high power endurance, low self-discharge rate, light weight, environmental friendliness, and almost no water consumption in production, have gradually become the mainstream product of energy storage.

Currently, as battery applications become more widespread, how to improve the reliability of batteries is an urgent technical problem to be solved in energy storage technology.

### SUMMARY

The objective of the present application is to provide a battery and an energy storage device to reduce potential accident hazards of the battery and improve the reliability of the battery.

In a first aspect, the embodiments of the present application provide a battery. The battery includes a battery case; a pressure relief mechanism, arranged on a wall part of the battery case, where the pressure relief mechanism is configured to release an internal pressure of the battery case when the internal pressure or temperature of the battery case reaches a threshold; and a first negative pressure mechanism, connected to the pressure relief mechanism, where the first negative pressure mechanism is configured to generate negative pressure to guide gas in the battery case to move toward the pressure relief mechanism.

In the above technical solution, the first negative pressure mechanism can generate negative pressure when the battery releases pressure, such that the air pressure in the negative-pressure area is lower than the air pressure inside the battery, thereby forming an airflow flowing from the high-pressure area to the low-pressure area. The airflow drives the gas in the battery case to move toward the pressure relief mechanism. This accelerates the speed at which the gas inside the battery case moves toward the pressure relief mechanism, and thus accelerates the speed at which the pressure relief mechanism releases pressure. As such, the gas inside the battery is discharged from the battery case and thereby potential accident hazards are reduced and the reliability of the battery is improved.

In some embodiments, the pressure relief mechanism includes a valve body and a valve core; the valve body is connected to the wall part of the battery case, and the valve body is provided with a pressure relief channel; the valve core is configured to close or open the pressure relief channel; the first negative pressure mechanism is connected to the valve body.

In the above technical solution, the valve core can open the pressure relief channel when the temperature or pressure in the battery reaches a threshold and close the pressure relief channel when the temperature or pressure in the battery is lower than the threshold.

In some embodiments, the first negative pressure mechanism includes a negative pressure fan.

In the above technical solution, the negative pressure fan is configured to generate negative pressure. The negative pressure fan has a simple structure and is convenient for production and manufacturing.

In some embodiments, the first negative pressure mechanism includes a condensing pipe.

In the above technical solution, through the continuous cooling of the condensing pipe to lower the surrounding air pressure, the speed at which the gas in the battery case moves toward the pressure relief mechanism is further accelerated, such that the potential accident hazards are further reduced and the reliability of the battery is improved.

In some embodiments, the first negative pressure mechanism includes a negative pressure fan and a condensing pipe; the negative pressure fan includes a frame and blades, and the blades are rotatably arranged within the frame; the condensing pipe is wound around the frame.

In the above technical solution, based on the arrangement with the negative pressure fan, the condensing pipe is wound around the frame and performs continuous cooling around the frame to lower the surrounding air pressure, such that the speed at which the gas in the battery moves toward the pressure relief mechanism is accelerated when the pressure relief mechanism releases pressure.

In a second aspect, the present application provides an energy storage device. The energy storage device includes an energy storage case; and the battery according to the embodiments of the first aspect, where the battery is accommodated in the energy storage case.

In some embodiments, the energy storage device further includes a second negative pressure mechanism, and the second negative pressure mechanism is configured to generate negative pressure to guide a discharge of gas from within the energy storage case.

In the above technical solution, the second negative pressure mechanism can generate negative pressure, and an airflow that flows from the high-pressure area to the low-pressure area is formed inside the energy storage case, thereby discharging the high-temperature and high-pressure gas from the battery out of the energy storage case. If the concentration of flammable substances in local areas inside the energy storage case is too high or the gas temperature in local areas is too high, it will cause a thermal runaway of the battery or even an explosion, posing an accident hazard. Therefore, the arrangement of the second negative pressure mechanism to discharge the gas inside the energy storage case can balance the concentration of flammable substances in various areas inside the energy storage case and also reduce the pressure difference between the inside and outside of the energy storage device, thereby reducing potential accident hazards of the energy storage device.

In some embodiments, the energy storage case includes a cabin body and a cabin door; the cabin body is provided with an opening, and the cabin door is configured to close the opening; the second negative pressure mechanism is arranged on the cabin body and/or the cabin door.

In the above technical solution, the arrangement of the second negative pressure mechanism on the cabin body or the cabin door does not occupy the internal space of the energy storage case, and there is no need to arrange a pipe or other structure inside the energy storage case to guide the gas discharge. Under the action of atmospheric pressure, the gas inside the energy storage case flows toward the second negative pressure mechanism and forms a directional and stable airflow, such that the gas is discharged and the potential accident hazards are reduced.

In addition, the cabin door is a door leaf for opening the energy storage device. The arrangement of the second negative pressure mechanism on the cabin door can facilitate operators to disassemble and install the second negative pressure mechanism.

In some embodiments, a partition plate is arranged within the energy storage case, and the partition plate divides an internal space of the energy storage case into a plurality of battery compartments; the second negative pressure mechanism is arranged on the partition plate; an exhaust port is formed on a wall part of the energy storage case, and a channel that communicates the second negative pressure mechanism with the exhaust port is formed in the partition plate.

In the above technical solution, the partition plate is located within the energy storage case, and the interior of the energy storage case is free from rainwater and is not affected by the external environment, such that the internal environment of the energy storage case is relatively stable. Compared to the embodiment in which the second negative pressure mechanism is arranged on the cabin door, the arrangement of the second negative pressure mechanism on the partition plate can extend the service life of the second negative pressure mechanism.

In some embodiments, the energy storage device includes a plurality of battery clusters and a third negative pressure mechanism; each of the battery clusters includes a battery cluster case and a plurality of the batteries arranged in the battery cluster case; the third negative pressure mechanism is arranged on a wall part of the battery cluster case, and the third negative pressure mechanism is configured to generate negative pressure to balance an internal pressure and an external pressure of the battery cluster case.

In the above technical solution, since the second negative pressure mechanism is arranged on the energy storage case and is relatively far from the batteries, if the high temperature or flammable substances are released from one of the batteries and the pressure in that area is not promptly reduced, the gas will impact the surrounding batteries, causing secondary hazards. Therefore, the third negative pressure mechanism is arranged to promptly balance the internal pressure and external pressure of the battery cluster case, and high temperature, high pressure, and flammable gas within the battery cluster are discharged from the battery cluster, maintaining a relatively stable internal environment for the battery cluster. This can further reduce potential accident hazards of the energy storage device.

In some embodiments, the plurality of batteries in the battery cluster case are arranged in a first direction, and each battery cluster case is provided with a plurality of the third negative pressure mechanisms that are arranged in a second direction, the second direction being perpendicular to the first direction.

In the above technical solution, compared to the energy storage case, the battery cluster case is closer to the battery. The third negative pressure mechanisms are arranged on the wall part of the battery cluster case, if a battery generates high temperature, high pressure, or a flammable gas, the plurality of the third negative pressure mechanisms can promptly generate negative pressure in the area close to the battery and discharge the gas in time, thus balancing the internal pressure and external pressure of the battery cluster case and reducing potential accident hazards.

In some embodiments, the energy storage device further includes a battery management system, and the first negative pressure mechanism is connected to the battery management system.

In the above technical solution, the connection of the battery management system to the first negative pressure mechanism allows for intelligent management and control of the first negative pressure mechanism.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic exploded structure diagram of a battery according to some embodiments of the present application;
FIG. 2 is a schematic three-dimensional structure diagram of a pressure relief mechanism according to some embodiments of the present application;
FIG. 3 is a schematic structural diagram of a first negative pressure mechanism connecting to a pressure relief mechanism according to some embodiments of the present application;
FIG. 4 is a schematic three-dimensional structure diagram of a first negative pressure mechanism according to some embodiments of the present application;
FIG. 5 is a schematic diagram of a three-dimensional structure of an energy storage device according to some embodiments of the present application;
FIG. 6 is a schematic diagram of a three-dimensional structure of an energy storage device according to some other embodiments of the present application;
FIG. 7 is a schematic diagram of a front-view structure of an energy storage device according to yet other embodiments of the present application; and
FIG. 8 is a schematic three-dimensional structure diagram of a battery cluster according to some embodiments of the present application.

Reference numerals: 10-battery; 11-battery case; 12-pressure relief mechanism; 121-valve body; 122-valve core; 13-first negative pressure mechanism; 131-negative pressure fan; 1311-frame; 1312-blade; 132-condensing pipe; 1321-inlet end; 1322-outlet end; 100-energy storage device; 20-energy storage case; 21-cabin body; 22-cabin door; 30-partition plate; 40-second negative pressure mechanism; 50-third negative pressure mechanism; 60-battery cluster case; Z-first direction; X-second direction.

### DETAILED DESCRIPTION

To make the objectives, technical solutions, and advantages of the embodiments of the present application clearer, the technical solutions in the embodiments of the present application will be clearly and completely described below with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those of ordinary skill in the art to which the present application belongs. The terms used in the specification of the present application are only used to describe specific embodiments and are not intended to limit the present application. The terms "include", "comprise", "have", and any variants thereof in the specification and claims of the present application and the descriptions of the above drawings are intended to cover a non-exclusive inclusion. The terms "first", "second", and the like in the specification and claims of the present application and the above drawings are defined to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "connect", "connection", and "attachment" shall be construed broadly and may be, for example, fixed connection, detachable connection, or integrated connection, or direct connection, indirect connection via an intermediate, or internal communication between two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality" used in the present application refers to two or more (including two).

In the present application, battery cells include but are not limited to lithium-ion secondary batteries, lithium-ion primary batteries, lithium-sulfur batteries, sodium-lithium-ion batteries, sodium-ion batteries, or magnesium-ion batteries. The battery cell may be cylindrical, flat, rectangular parallelepiped, or in other shapes. According to the packaging method, battery cells are generally divided into three types: cylindrical battery cells, square battery cells, and soft-pack battery cells.

The battery mentioned in the embodiments of the present application refers to a single physical module including one or more battery cells to provide higher voltage and capacity. For example, the battery mentioned in the present application may include a battery module, a battery pack, or the like. A battery generally includes a case used for encapsulating one or more battery cells. The case can reduce the risk of liquid or other foreign matters affecting the charging or discharging of the battery cells.

A battery cell includes an electrode assembly and an electrolyte. The electrode assembly is composed of a positive electrode plate, a negative electrode plate, and a separation film. The battery cell primarily works by the movement of metal ions between the positive electrode plate and the negative electrode plate. The positive electrode plate includes a positive electrode current collector and a positive electrode active substance layer. The positive electrode active substance layer is coated on the surface of the positive electrode current collector. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, or lithium manganate, etc. The negative electrode plate includes a negative electrode current collector and a negative electrode active substance layer. The negative electrode active substance layer is coated on the surface of the negative electrode current collector. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active material may be carbon or silicon. To ensure the passing of a large current without fusing, there are a plurality of positive electrode tabs that are stacked together, and there are a plurality of negative electrode tabs that are stacked together. The material of the separation film may be polypropylene (PP), polyethylene (PE), or the like. In addition, the electrode assembly may be a winding structure or a stacking structure, but the embodiments of the present application are not limited thereto.

Thermal runaway in a battery is a serious safety accident, which may cause the battery to catch fire or even explode, directly threatening the safety of users.

During the actual use of the battery, the battery will be affected by various complex environments, leading to potential accident hazards. For example, situations such as overcharging, short circuit, high temperature, or deformation from collision of the battery, accompanied by high temperature, will cause the internal pressure of the battery to exceed the external pressure. If the pressure relief mechanism of the battery fails to release the internal pressure of the battery in time, it will lead to thermal runaway in the battery, resulting in the battery burning or exploding.

Based on the above considerations, the embodiments of the present application provide a battery, and a negative pressure mechanism is arranged at the location where the pressure relief mechanism of the battery is located. In such an arrangement, when the pressure relief mechanism of the battery is activated to release pressure, the negative pressure mechanism can generate negative pressure to guide the gas in the battery pack to move toward the pressure relief mechanism, such that the gas is discharged to the outside of the battery, thereby reducing potential accident hazards and improving the reliability of the battery.

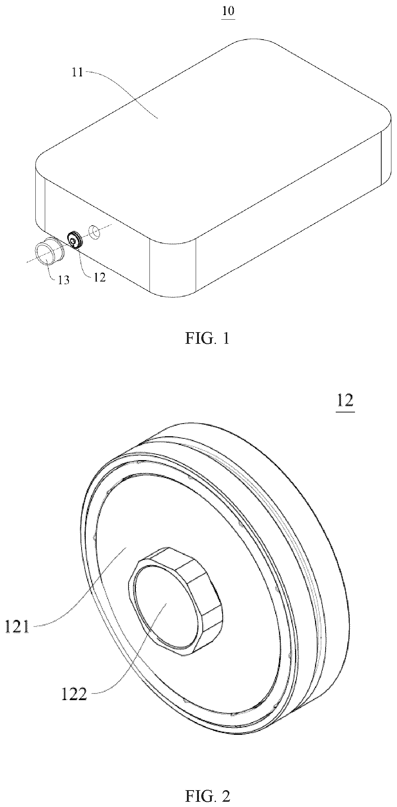

Referring to FIG. 1, FIG. 1 is a schematic exploded structure diagram of a battery 10 according to some embodiments of the present application.

The embodiments of the present application provide a battery 10. The battery 10 includes a battery case 11, a pressure relief mechanism 12, and a first negative pressure mechanism 13. The pressure relief mechanism 12 is arranged on the wall part of the battery case 11. The pressure relief mechanism 12 is configured to release the internal pressure of the battery case 11 when the internal pressure or temperature of the battery case 11 reaches a threshold. The first negative pressure mechanism 13 is connected to the pressure relief mechanism 12. The first negative pressure mechanism 13 is configured to generate negative pressure to guide the gas in the battery case 11 to move toward the pressure relief mechanism 12.

The pressure relief mechanism 12 may be opened in two methods to release the internal pressure of the battery case 11. That is, the pressure relief mechanism 12 may perform an action when the internal pressure of the battery 10 reaches a threshold to form a pressure relief channel for releasing the internal pressure or temperature. The pressure relief mechanism 12 may also perform an action when the temperature of the battery 10 reaches a threshold to form a pressure relief channel for releasing the internal pressure or temperature.

The pressure relief mechanism 12 may be arranged on the top wall of the battery case 11; or, the pressure relief mechanism 12 may be arranged on the side wall of the battery case 11.

The first negative pressure mechanism 13 can form negative pressure. The instantaneous air pressure in the area with negative pressure is lower than the air pressure inside the battery case 11. Under the action of atmospheric pressure, an airflow, flowing from the high-pressure area to the negative-pressure area, is formed. The airflow drives the gas in the battery case 11 to move toward the pressure relief mechanism 12.

In the embodiment, the first negative pressure mechanism 13 can generate negative pressure when the battery 10 releases pressure, such that the air pressure in the negative-pressure area is lower than the air pressure inside the battery 10, thereby forming an airflow flowing from the high-pressure area to the low-pressure area. The airflow drives the gas in the battery case 11 to move toward the pressure relief mechanism 12. This accelerates the speed at which the gas inside the battery case 11 moves toward the pressure relief mechanism 12, and thus accelerates the speed at which the pressure relief mechanism 12 releases pressure. As such, the gas inside the battery 10 is discharged from the battery case 11 and thereby potential accident hazards are reduced and the reliability of the battery 10 is improved.

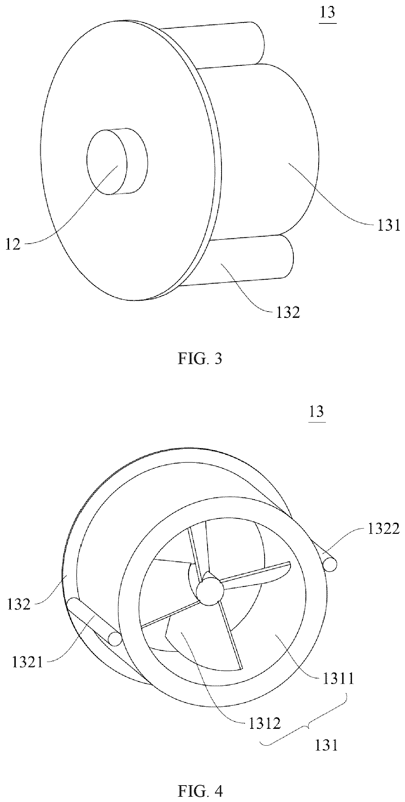

In some embodiments, referring to FIGs. 2 and 3, FIG. 2 is a schematic three-dimensional structure diagram of a pressure relief mechanism 12 according to some embodiments of the present application; FIG. 3 is a schematic structural diagram of a first negative pressure mechanism 13 connecting to a pressure relief mechanism 12 according to some embodiments of the present application. The pressure relief mechanism 12 includes a valve body 121 and a valve core 122. The valve body 121 is connected to the wall part of the battery case 11. The valve body 121 is provided with a pressure relief channel. The valve core 122 is configured to close or open the pressure relief channel. The first negative pressure mechanism 13 is connected to the valve body 121.

Specifically, a mounting hole may be formed on the wall part of the battery case 11 and the valve body 121 is installed in the mounting hole.

The pressure relief channel refers to a channel formed in the valve body 121 and capable of communicating with the interior of the battery case 11. The valve core 122 can open the pressure relief channel when the temperature or pressure in the battery 10 reaches a threshold and close the pressure relief channel when the temperature or pressure in the battery 10 is lower than the threshold.

Certainly, in other embodiments, the pressure relief mechanism 12 may also take the form of a gas valve, a pressure relief valve, a safety valve, or the like, and may specifically adopt a pressure-sensitive or temperature-sensitive element or configuration. That is, when the internal pressure or temperature of the battery 10 reaches a threshold, the pressure relief mechanism 12 performs an action to form a pressure relief channel for releasing the internal pressure or temperature.

In some embodiments, referring to FIG. 4, FIG. 4 is a schematic three-dimensional structure diagram of a first negative pressure mechanism 13 according to some embodiments of the present application. The first negative pressure mechanism 13 includes a negative pressure fan 131. The negative pressure fan 131 is configured to generate negative pressure to guide the gas in the battery case 11 to move toward the pressure relief mechanism 12 when the pressure relief mechanism 12 releases pressure.

Optionally, the first negative pressure mechanism 13 may also be a micro vacuum pump or the like.

In some embodiments, the first negative pressure mechanism 13 further includes a condensing pipe 132.

Specifically, a condensing medium circulates inside the condensing pipe 132. The condensing pipe 132 has the function of condensation or reflux. The condensing medium inside the condensing pipe 132 can exchange heat with the external gas to lower the surrounding gas temperature, thereby lowering the surrounding air pressure. An inlet end 1321 and an outlet end 1322 of the condensing pipe 132 are respectively communicated with an external generating device to achieve cyclic refrigeration.

The condensing medium may be one of a gaseous condensing medium, a liquid condensing medium, or a solid condensing medium.

The gaseous condensing medium may be air. The liquid condensing medium may be water, salt water, or the like. The solid condensing medium may be ice, dry ice, or the like.

Through the continuous cooling of the condensing pipe 132 to lower the surrounding air pressure, the speed at which the gas in the battery case 11 moves toward the pressure relief mechanism 12 is further accelerated, such that the potential accident hazards are further reduced and the reliability of the battery 10 is improved.

In some embodiments, the first negative pressure mechanism 13 may include both a negative pressure fan 131 and a condensing pipe 132. The negative pressure fan 131 includes a frame 1311 and blades 1312. The blades 1312 are rotatably arranged within the frame 1311. The condensing pipe 132 is wound around the frame 1311.

The frame 1311 may be connected to the valve body 121 of the pressure relief mechanism 12. The condensing pipe 132 may be wound around the outer circumference of the frame 1311.

The condensing pipe 132 may be wound around the outer circumference of the frame 1311 by half a turn, one turn, or multiple turns. Exemplarily, in FIG. 4, the condensing pipe 132 is wound around the outer circumference of the frame 1311 by one turn.

Further, the condensing pipe 132 may be arranged on one side, close to the pressure relief mechanism 12, of the frame 1311.

Based on the arrangement with the negative pressure fan 131, the condensing pipe 132 is wound around the frame 1311 and performs continuous cooling around the frame 1311 to lower the surrounding air pressure, such that the speed at which the gas in the battery 10 moves toward the pressure relief mechanism 12 is accelerated when the pressure relief mechanism 12 releases pressure.

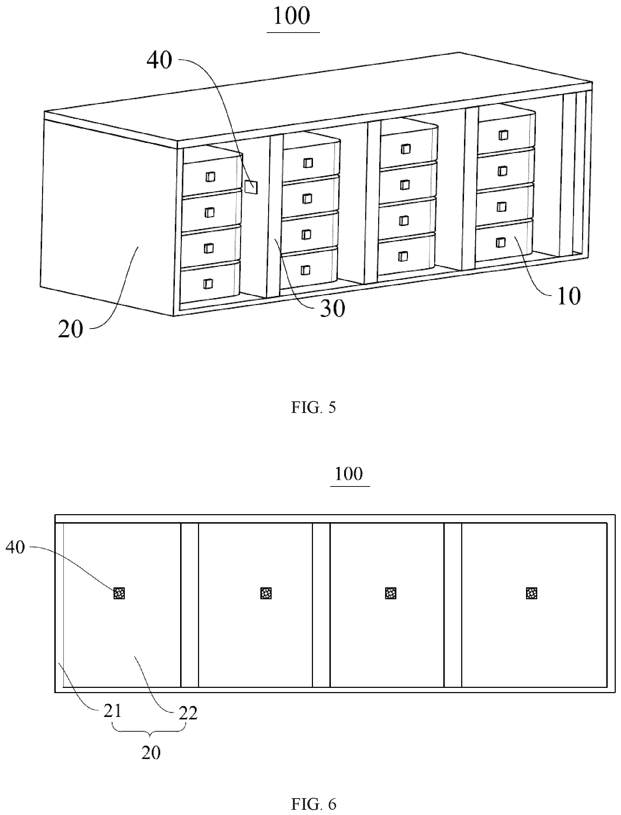

The present application further provides an energy storage device 100. Referring to FIG. 5, FIG. 5 is a schematic three-dimensional structure diagram of an energy storage device 100 according to some embodiments of the present application.

The energy storage device 100 includes an energy storage case 20 and the battery 10 according to any one of the above embodiments. The battery 10 is accommodated in the energy storage case 20.

Typically, the interior of the energy storage device 100 is a relatively sealed structure (not completely sealed). The internal energy storage of the energy storage device 100 generally uses a battery 10 based on the LFP (LiFePO₄, lithium iron phosphate) system. The battery 10 based on the LFP system presents the following accident hazards: On the one hand, the pressure relief mechanism 12 of the battery 10, when activated, will generate a large number of flammable substances, such as electrolyte vapor. On the other hand, if a battery 10 in the energy storage device 100 goes out of control, a large amount of flammable substances such as H₂, CO, CH₄, and C₂H₆ will be generated.

The generation of the above flammable substances is also accompanied by high temperature, leading to an increase in the pressure inside the battery 10. If the above flammable substances are retained inside the energy storage device 100, an explosion may occur when the energy storage case 20 is not strong enough. The high-temperature and high-pressure gas will impact the surrounding batteries 10, and the flammable substances can easily ignite upon encountering a spark, causing an explosion and secondary hazards, thus posing an accident hazard.

Based on the above considerations, referring to FIG. 5, the embodiments of the present application provide an energy storage device 100. The energy storage device 100 further includes a second negative pressure mechanism 40. The second negative pressure mechanism 40 is configured to generate negative pressure to guide the discharge of the gas from within the energy storage case 20.

The second negative pressure mechanism 40 may include a frame 1311 and blades 1312. The frame 1311 is installed on the wall part of the energy storage case 20. The blades 1312 rotate to form negative pressure. The instantaneous air pressure in the area with negative pressure is lower than the air pressure inside the energy storage case 20. Under the action of atmospheric pressure, an airflow that flows directionally from the high-pressure area to the negative-pressure area is formed inside the energy storage device 100, thus guiding the discharge of the gas from within the energy storage case 20.

In the embodiment, the second negative pressure mechanism 40 can generate negative pressure, and an airflow that flows from the high-pressure area to the low-pressure area is formed inside the energy storage case 20, thereby discharging the high-temperature and high-pressure gas from the battery 10 out of the energy storage case 20.

If the concentration of flammable substances in local areas inside the energy storage case 20 is too high or the gas temperature in local areas is too high, it will cause a thermal runaway of the battery 10 or even an explosion, posing an accident hazard. Therefore, the arrangement of the second negative pressure mechanism 40 to discharge the gas inside the energy storage case 20 can balance the concentration of flammable substances in various areas inside the energy storage case 20 and also reduce the pressure difference between the inside and outside of the energy storage device 100, thereby reducing potential accident hazards of the energy storage device 100.

In some embodiments, referring to FIG. 6, FIG. 6 is a schematic diagram of a three-dimensional structure of an energy storage device 100 according to some other embodiments of the present application. The energy storage case 20 includes a cabin body 21 and a cabin door 22. The cabin body 21 is provided with an opening, and the cabin door 22 is configured to close the opening.

The cabin body 21 is configured to accommodate the battery 10, and the cabin door 22 is configured to open or close the opening of the cabin door 22.

The second negative pressure mechanism 40 may be arranged on the cabin body 21, or the second negative pressure mechanism 40 may be arranged on the cabin door 22. Alternatively, both the cabin body 21 and the cabin door 22 are provided with the second negative pressure mechanism 40.

The arrangement of the second negative pressure mechanism 40 on the cabin body 21 or the cabin door 22 does not occupy the internal space of the energy storage case 20, and there is no need to arrange a pipe or other structure inside the energy storage case 20 to guide the gas discharge. Under the action of atmospheric pressure, the gas inside the energy storage case 20 flows toward the second negative pressure mechanism 40 and forms a directional and stable airflow, such that the gas is discharged and the potential accident hazards are reduced.

In addition, the cabin door 22 is a door leaf for opening the energy storage device 100. The arrangement of the second negative pressure mechanism 40 on the cabin door 22 can facilitate operators to disassemble and install the second negative pressure mechanism 40.

In some embodiments, referring to FIG. 5, a partition plate 30 is arranged within the energy storage case 20, and the partition plate 30 divides the internal space of the energy storage case 20 into a plurality of battery compartments. The second negative pressure mechanism 40 is arranged on the partition plate 30. An exhaust port is formed on the wall part of the energy storage case 20, and a channel that communicates the second negative pressure mechanism 40 with the exhaust port is formed in the partition plate 30.

The wall part of the energy storage case 20 may be the cabin body 21, or the wall part of the energy storage case 20 may be the cabin door 22. That is, the exhaust port may be formed on the cabin body 21 or on the cabin door 22.

A channel that communicates the second negative pressure mechanism 40 with the exhaust port is formed in the partition plate 30, and the gas in the energy storage case 20 can be discharged by passing through the second negative pressure mechanism 40 and reaching the exhaust port via the channel.

The partition plate 30 is located within the energy storage case 20, and the interior of the energy storage case 20 is free from rainwater and is not affected by the external environment, such that the internal environment of the energy storage case 20 is relatively stable. Compared to the embodiment in which the second negative pressure mechanism 40 is arranged on the cabin door 22, the arrangement of the second negative pressure mechanism 40 on the partition plate 30 can extend the service life of the second negative pressure mechanism 40.

Further, operators can, according to the arrangement of the wire harness inside the energy storage device 100, arrange the exhaust port at a position away from the high-voltage line as required, thereby reducing potential accident hazards.

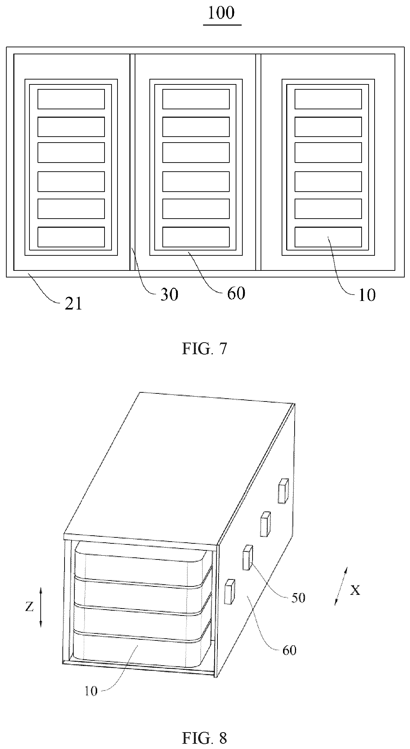

In some embodiments, referring to FIGs. 7 and 8, FIG. 7 is a schematic diagram of a front-view structure of an energy storage device 100 according to some other embodiments of the present application; FIG. 8 is a schematic three-dimensional structure diagram of a battery cluster according to some embodiments of the present application. The energy storage device 100 includes a plurality of battery clusters and a third negative pressure mechanism 50. Each battery cluster includes a battery cluster case 60 and a plurality of batteries 10 arranged in the battery cluster case 60. The third negative pressure mechanism 50 is arranged on the wall part of the battery cluster case 60. The third negative pressure mechanism 50 is configured to generate negative pressure to balance the internal pressure and external pressure of the battery cluster case 60.

The third negative pressure mechanism 50 may also include a frame 1311 and blades 1312. The frame 1311 may be arranged on a side wall of the battery cluster case 60.

Since the second negative pressure mechanism 40 is arranged on the energy storage case 20 and is relatively far from the batteries 10, if the high temperature or flammable substances are released from one of the batteries 10 and the pressure in that area is not promptly reduced, the gas will impact the surrounding batteries 10, causing secondary hazards.

Therefore, the third negative pressure mechanism 50 is arranged to promptly balance the internal pressure and external pressure of the battery cluster case 60, and high temperature, high pressure, and flammable gas within the battery cluster are discharged from the battery cluster, maintaining a relatively stable internal environment for the battery cluster. This can further reduce potential accident hazards of the energy storage device 100.

In some embodiments, the plurality of the batteries 10 in the battery cluster case 60 are arranged in a first direction Z. Each battery cluster case 60 is provided with a plurality of the third negative pressure mechanisms 50 that are arranged in a second direction X. The second direction X is perpendicular to the first direction Z.

Exemplarily, in FIG. 8, the first direction Z is defined as the height direction, and the plurality of batteries 10 are arranged in the height direction.

There may be one, two, three, etc., third negative pressure mechanisms 50. Exemplarily, in FIG. 8, there are four third negative pressure mechanisms 50.

Compared to the energy storage case 20, the battery cluster case 60 is closer to the battery 10. The third negative pressure mechanisms 50 are arranged on the wall part of the battery cluster case 60, if a battery 10 generates high temperature, high pressure, or a flammable gas, the plurality of the third negative pressure mechanisms 50 can promptly generate negative pressure in the area close to the battery 10 and discharge the gas in time, thus balancing the internal pressure and external pressure of the battery cluster case 60 and reducing potential accident hazards.

In some embodiments, the energy storage device 100 further includes a battery management system, and the first negative pressure mechanism 13 is connected to the battery management system.

The battery management system is configured for intelligent management and maintenance of each battery 10, preventing the battery 10 from being overcharged and over-discharged, extending the service life of the battery 10, and monitoring the status of the battery 10, thus reducing potential accident hazards.

The connection of the battery management system to the first negative pressure mechanism 13 allows for intelligent management and control of the first negative pressure mechanism 13.

Certainly, in other embodiments, the battery management system may also be connected to both the second negative pressure mechanism 40 and the third negative pressure mechanism 50.

In some embodiments, the present application provides an energy storage device 100. The energy storage device 100 includes a battery cluster case 60, an energy storage case 20, a second negative pressure mechanism 40, a third negative pressure mechanism 50, and a plurality of batteries 10. The battery 10 includes a battery case 11, a pressure relief mechanism 12, and a first negative pressure mechanism 13. The pressure relief mechanism 12 is arranged on the wall part of the battery case 11. The pressure relief mechanism 12 is configured to release the internal pressure of the battery case 11 when the internal pressure or temperature of the battery case 11 reaches a threshold. The first negative pressure mechanism 13 is connected to the pressure relief mechanism 12. The first negative pressure mechanism 13 is configured to generate negative pressure to guide the gas in the battery case 11 to move toward the pressure relief mechanism 12. The second negative pressure mechanism 40 is arranged on the energy storage case 20. The second negative pressure mechanism 40 is configured to generate negative pressure to guide the discharge of the gas from within the energy storage case 20. A plurality of batteries 10 are arranged within the battery cluster case 60. The third negative pressure mechanism 50 is arranged on the wall part of the battery cluster case 60. The third negative pressure mechanism 50 is configured to generate negative pressure to balance the internal pressure and external pressure of the battery cluster case 60.

It should be noted that unless conflicting, the embodiments and features of the embodiments in the present application may be combined with each other.

The above embodiments are only intended to illustrate the technical solutions of the present application and are not intended to limit the present application. For those skilled in the art, various modifications and changes can be made to the present application. Any modification, equivalent substitution, improvement, and the like made within the spirit and principle of the present application shall all fall within the protection scope of the present application.

## Claims

1. A battery, comprising:
a battery case;
a pressure relief mechanism, arranged on a wall part of the battery case, wherein the pressure relief mechanism is configured to release an internal pressure of the battery case when the internal pressure or temperature of the battery case reaches a threshold; and
a first negative pressure mechanism, connected to the pressure relief mechanism, wherein the first negative pressure mechanism is configured to generate negative pressure to guide gas in the battery case to move toward the pressure relief mechanism.

2. The battery according to claim 1, wherein the pressure relief mechanism comprises a valve body and a valve core; the valve body is connected to the wall part of the battery case, and the valve body is provided with a pressure relief channel; the valve core is configured to close or open the pressure relief channel; the first negative pressure mechanism is connected to the valve body.

3. The battery according to any one of claims 1 to 2, wherein the first negative pressure mechanism comprises a negative pressure fan.

4. The battery according to any one of claims 1 to 3, wherein the first negative pressure mechanism comprises a condensing pipe.

5. The battery according to any one of claims 1 to 2, wherein the first negative pressure mechanism comprises a negative pressure fan and a condensing pipe; the negative pressure fan comprises a frame and blades, and the blades are rotatably arranged within the frame; the condensing pipe is wound around the frame.

6. An energy storage device, comprising:
an energy storage case, and
the battery according to any one of claims 1 to 5, wherein the battery is accommodated in the energy storage case.

7. The energy storage device according to claim 6, wherein the energy storage device further comprises a second negative pressure mechanism, and the second negative pressure mechanism is configured to generate negative pressure to guide a discharge of gas from within the energy storage case.

8. The energy storage device according to claim 7, wherein the energy storage case comprises a cabin body and a cabin door; the cabin body is provided with an opening, and the cabin door is configured to close the opening; the second negative pressure mechanism is arranged on the cabin body and/or the cabin door.

9. The energy storage device according to claim 7 or 8, wherein a partition plate is arranged within the energy storage case, and the partition plate divides an internal space of the energy storage case into a plurality of battery compartments; the second negative pressure mechanism is arranged on the partition plate; an exhaust port is formed on a wall part of the energy storage case, and a channel that communicates the second negative pressure mechanism with the exhaust port is formed in the partition plate.

10. The energy storage device according to any one of claims 6 to 9, wherein the energy storage device comprises a plurality of battery clusters and a third negative pressure mechanism; each of the battery clusters comprises a battery cluster case and a plurality of the batteries arranged in the battery cluster case; the third negative pressure mechanism is arranged on a wall part of the battery cluster case, and the third negative pressure mechanism is configured to generate negative pressure to balance an internal pressure and an external pressure of the battery cluster case.

11. The energy storage device according to claim 10, wherein the plurality of batteries in the battery cluster case are arranged in a first direction, and each battery cluster case is provided with a plurality of the third negative pressure mechanisms that are arranged in a second direction, the second direction being perpendicular to the first direction.

12. The energy storage device according to any one of claims 6 to 11, wherein the energy storage device further comprises a battery management system, and the first negative pressure mechanism is connected to the battery management system.
